# EUROPEAN PATENT SPECIFICATION

(11) **EP 3 262 916 B1**
(45) Date of publication and mention of the grant of the patent: **23.01.2019**
(21) Application number: 17175686.9
(22) Date of filing: 13.06.2017
(51) Int. Cl.: A01D 34/86, A01G 3/04

(54) **ROTATING DISC MOWER WITH A LIGHTENED SIDE MOWING BAR**
MÄHER MIT SCHEIBENMÄHBALKEN MIT ERLEICHTERUNGSVORRICHTUNG
FAUCHEUSE À DISQUE AYANT UNE BARRE DE COUPE AVEC DISPOSITIF D'ALLÉGEMENT

(30) Priority: 29.06.2016 IT UA20164749
(43) Date of publication of application: 03.01.2018
(73) Proprietor: BCS S.p.A., 20123 Milano (MI) (IT)
(72) Inventor: GILARDI, Roberto, IT/20094 Corsico (MI) (IT)
(74) Representative: Giuli, Maurizio Mario Galdino

(56) References cited:
- EP-A1- 0 486 415
- EP-A1- 0 570 315
- EP-A1- 1 297 732
- WO-A1-2014/009652

## Description

The present invention relates to a rotary disc mower with a lightened side mowing bar.

In the field of agriculture, it is known that, during grass cutting, a rotary disc mower applied laterally to a tractor or to a , used for cutting grass, must have a light pressure on the ground, so as not to damage the turf or pollute the fodder cut by the same, with earth.

In order to achieve this, mowers of this type are equipped with specific lightening elements of the mowing bar such as springs, hydraulic cylinders, etc. The arrangement of these lightening elements has the specific function of releasing part of the weight of the mowing bar on the tractor, so as to reduce its weight on the ground.

This type of lightening, which, for the sake of simplicity, can be defined as "static", can normally be adjusted by the operator in relation to the type of land and expected working speed.

It is true, however, that the weight of the mowing bar on the ground should not be reduced too much, as the mowing bar must follow the irregular and completely unexpected profile of the ground on which it is working.

If the mowing bar is too light, it may occur that, when encountering a small bump, instead of faithfully following the contour of the ground, it tends "to take-off", thus interrupting the cutting of the grass for a certain distance, a drawback which increases considerably with an increase in the cutting rate.

A good mowing bar must therefore be as light as possible but never leave the ground. These two main features are conflicting, in the sense that:
- the lighter the bar, the less it ruins the turf;
- the lighter the bar, the more it tends to take-off.

Normally a compromise is sought, which is not easy to achieve with satisfactory results.

WO 2014/009652 describes a rotating disc mower according to the preamble of claim 1.

The general objective of the present invention is to provide a rotary disc mower with a lightened side mowing bar capable of solving the above-mentioned drawbacks.

A further objective of the present invention is to provide a rotary disc mower with a lightened side mowing bar capable of minimizing the weight of the mowing bar on the ground, at the same time avoiding the "take-off" phenomenon.

Another objective of the present invention is to provide a rotary disc mower with a lightened side mowing bar which can solve the drawbacks of the known art in a very simple, economical and particularly functional manner.

The structural and functional features of the present invention and its advantages with respect to the known art, will appear even more evident from the following description, referring to the enclosed schematic drawings which show an embodiment of the invention. In the drawings:
- figure 1 is a completely schematic perspective view showing a rotary disc mower with a similar lightened side mowing bar equipped with a mowing bar applied laterally, produced according to the invention;
- figure 2 is a plan view from above of what is illustrated in figure 1;
- figure 3 is a raised side view of the arrangement of the mowing bar alone shown in the previous figures 1 and 2;

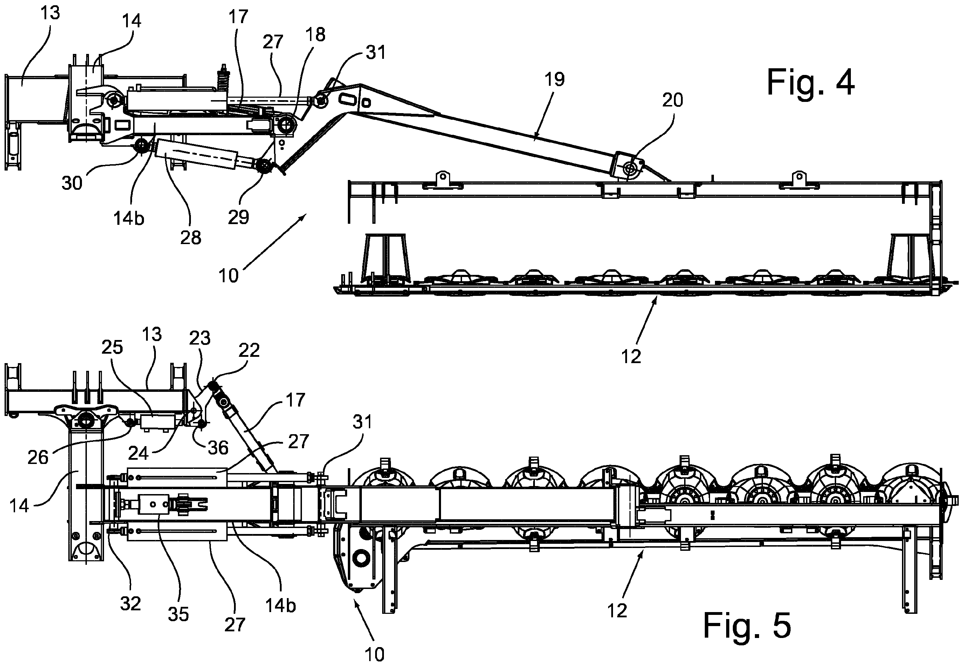

- figure 4 is a raised view from the rear side of the mowing bar according to the invention;
- figure 5 is an enlarged plan view of what is illustrated in figure 2;

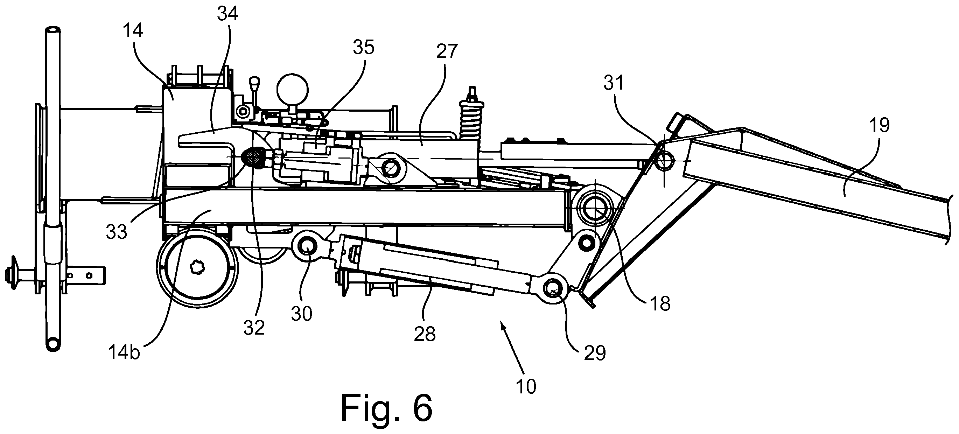

- figure 6 is an enlarged, partially sectional view of what is shown in figure 4.

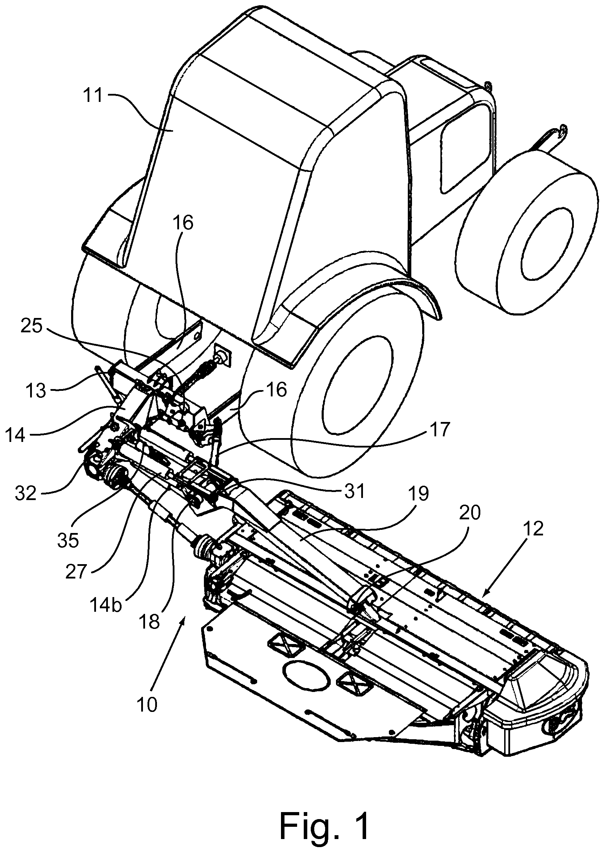

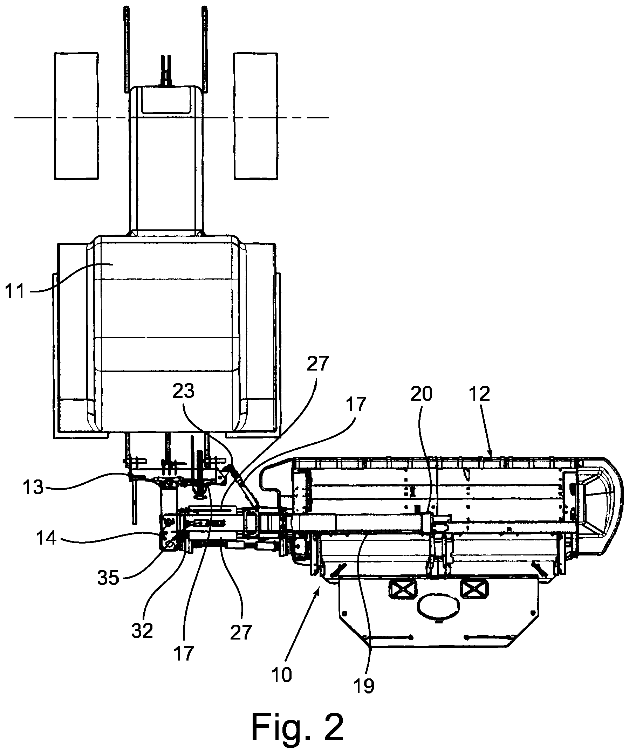

With reference to figures 1 and 2, these show a rotary disc mower 10, carried by a tractor, schematized in 11, which comprises a rotating disk mowing bar 12 supported by a fixed frame 13 and a movable frame 14.

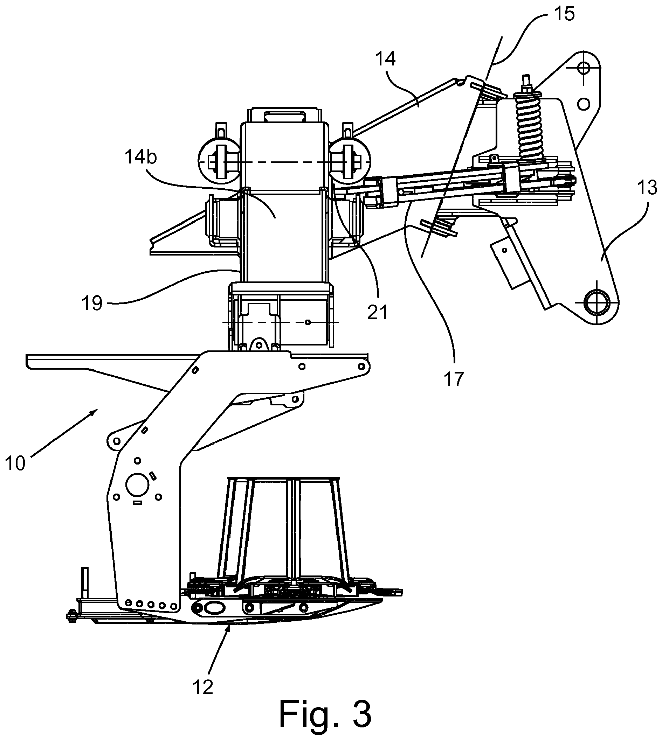

Said mower 10 is constrained to arms 16 which extend from the tractor 11. More specifically, the tractor 11 provides that a fixed frame 13 can be attached to its arms 16. Said fixed frame 13 is in turn constrained to a movable frame 14 around a tilted rotation pin 15 (figure 3). The movable frame 14, as can be seen hereunder, carries the rotating disc mowing bar 12, constrained by means of suitable hinging.

A release rod 17, which normally acts as a tie rod, is positioned between the fixed frame 13 and the movable frame 14. This release rod 17 also has the function of intervening when pre-established resistance values to the advancement of the mowing bar 12 are exceeded. The release rod intervenes, in fact, when the mowing rod 12 encounters various kinds of obstacles which could damage the mower 10. In these cases, the release rod 17, suitably calibrated, extends, allowing the retraction of the mowing bar 12 and at times, its partial lifting, so to allow the obstacle to be overcome without damage.

The movable frame 14 extends laterally and in a set-square form in its extension 14b to which a supporting arm 19 is constrained by means of a pin 18, said supporting arm 19 in turn carrying the mowing bar 12 by means of a further pin 20, positioned at one of its ends. The pin 18 forms the rotation axis between the movable frame 14, 14b and the supporting arm 19, and the pin 20 forms the rotation axis between the supporting arm 19 and the mowing bar 12.

An end of the release rod 17 is articulated by means of a pin 21 to the movable frame 14b, whereas the opposite end is constrained between a pin 22 and a first end of a balancer transmission element 23. The balancer transmission element 23 is constrained by means of a pin 24, in an intermediate area, to the fixed frame 13 and at the other opposite end by means of a pin 36 to a rod of a hydraulic cylinder 25. The body of the hydraulic cylinder 25, on the other hand, is constrained, by means of a pin 26, to the fixed frame 13. This arrangement ensures that the first cylinder 25 is positioned between the fixed frame 13 and the release rod 17. In this way, the movement of the hydraulic cylinder 25 is rigidly connected to the release rod 17. The supporting arm 19 also provides that ends of two lifting cylinders 27 are constrained, in an area between its end carrying the mowing bar 12 and the pin 18 between the extension of the movable frame 14b and the supporting arm 19.

It should also be noted that a movement of the supporting arm 19 of the mowing bar 12 is allowed on a vertical plane by means of a cylinder charged with nitrogen 28 positioned, articulated at its ends in pins 29 and 30 between the extension 14b of the movable frame and a second end of the supporting arm 19. Said cylinder charged with nitrogen 28 effects the so-called "static" lightening which is adjusted *una tantum* by the operator and is the classical lightening device present on mowing bars of this type.

As can be seen from the figures, the two lifting cylinders 27 are constrained at a first end to a pin 31, passing into the supporting arm 19. The two cylinders 27 are constrained at their opposite ends to a pin 32, positioned inside slots 33 of ears 34 extending from the movable frame 14.

The pin 32 is positioned at the end of a hydraulic actuator cylinder 35 which, at its other end, is constrained to the extension 14b of the movable frame 14. The pin 32 therefore has a possibility of moving inside the slots 33 according to the normal direction of its rotation axis. This movement also controls the movement of the two cylinders 27 described above, as their ends are also integral with the pin 32. More generically, this second hydraulic cylinder 35 can be considered as being positioned between the movable frame 14, 14b and the supporting arm 19 of the mowing bar 12.

It should be noted that when the mowing bar 12 is operating, it encounters resistances to its advancement, mainly due to bar/ground friction which is significantly proportional to the weight of the mowing bar itself on the ground. According to the present invention, this resistant force is used for producing a "dynamic" lightening force which significantly adds to the conventional lightening called "static", which is constantly present on the mowing bar.

The present invention exploits the release rod 17 normally present on this type of bar and which is used herein, when operating, as an actual tie rod which activates the balancer transmission element 23. This in turn activates the hydraulic cylinder 25.

In this way, the longitudinal forces acting on the mowing bar are transformed into oil pressure in the first cylinder 25. This is hydraulically connected to the second cylinder 35. The dimensions of the chambers and rods of the two cylinders 25 and 35 are suitably calculated for obtaining the necessary amplification of the forces. This allows, during the development and designing of the tractor, the friction force/lightening force ratio to be changed. In this way, the pressure on the second cylinder 35 tends to move the pin 32 and therefore also the lifting cylinders 27.

These cylinders 27, when the tractor is in cutting position, are in an extended position and blocked and can be considered as being real rods or tie rods.

The cylinders 27 tend to rotate the arm 19 and therefore raise the mowing bar 12.

This results in a lighter mowing bar but with a better adaptation of the bar to the ground. On encountering a small ridge in the ground, in fact, the mowing rod "feels" the increased resistance and the provision of the invention transforms it into additional lightening, which facilitates it in slipping over and overcoming the obstacle. When the bar tends to become detached from the ground, on the other hand, the friction resistance is cancelled and the additional lightening is also automatically cancelled, allowing the mowing bar to return rapidly into contact with the ground.

This dynamic lightening action is independently and automatically added to the classic and ordinary lightening action produced by the cylinder charged with nitrogen 28 which produces the so-called "static" lightening, adjusted *una tantum* by the operator.

It has therefore been shown how, according to the present invention, the drawbacks of the known art have been eliminated in a mowing machine, by associating a dynamic lightening force with a static lightening force always present on a mowing bar of a rotary disc mower carried by a tractor or similar agricultural machine.

The forms of the structure for the production of a mower with a lightened side mowing bar of the invention, as also the materials and assembly modes, can naturally differ from those provided for purely illustrative and non-limited purposes in the drawings.

The objective mentioned in the preamble of the description has therefore been achieved.

The protection scope of the present invention is defined by the enclosed claims.

## Claims

1. A rotating disc mower (10) with a lightened side mowing bar (12) comprising a fixed frame (13), a movable frame (14,14b) and a lightening device of the mowing bar (12), wherein said mowing bar (12) is positioned on a supporting arm (19) articulated with respect to the movable frame (14,14b), wherein a cylinder (28) is positioned between said supporting arm (19) and said movable frame (14,14b), which keeps said supporting arm (19) of said mowing bar (12) raised, as it is uploaded according to a pre-established force, a release rod (17) also being positioned between said fixed frame (13) and said mowing bar (12) and two cylinders (27) respectively positioned between said movable frame (14,14b) and said supporting arm (19), **characterized in that** a first hydraulic cylinder (25) is also provided, positioned between said fixed frame (13) and said release rod (17), and a second hydraulic cylinder (35), positioned between said movable frame (14,14b) and said supporting arm (19) of said mowing bar (12), wherein said first and second hydraulic cylinders (25,35) are hydraulically connected and activated by said release rod (17) which intervenes in the presence of a resistant force on the mowing bar, wherein said two cylinders (27) are constrained at a first end to a pin (31), passing into the supporting arm (19), and at the other opposite end to a pin (32) rotatingly arranged with respect to said movable frame (14) and positioned inside slots (33) of ears (34) that extend from said movable frame (14).

2. The mower (10) according to claim 1, **characterized in that** said first and second cylinders (25,35) are activated by resistant forces that oppose the advancing of the mowing bar (12) and are cancelled as soon as the mowing bar (12) tends to leave the ground, as said resistant forces are no longer present.

3. The mower (10) according to claim 1 or 2, **characterized in that** said pin (32) is positioned at one end of said hydraulic cylinder (35) which, at its other end, is constrained to an extension (14b) of the movable frame (14).

4. The mower (10) according to one or more of the previous claims from 1 to 3, **characterized in that** said movable frame (14,14b) is constrained to said fixed frame (13) in turn constrained at the rear of said tractor by means of a tilted rotating pin (15).

5. The mower (10) according to one or more of the previous claims from 1 to 4, **characterized in that** said movable frame comprises a part (14) integral with said fixed frame (13) and a set-square extension (14b) towards said mowing bar (12).

6. The mower (10) according to one or more of the previous claims from 1 to 5, **characterized in that** said release rod (17) is connected to said fixed frame (13) with the interpositioning of said first hydraulic cylinder (25).

7. The mower (10) according to one or more of the previous claims from 1 to 6, **characterized in that** an end of said release rod (17) is connected to a balancer transmission element (23) which, in one of its intermediate areas, is constrained to the fixed frame (13) by means of a pin (24), and, at its opposite end, to said first hydraulic cylinder (25) by means of a pin (36) .

## Patentansprüche

1. Rotationsscheibenmäher (10) mit einem beleuchteten Seitenmähbalken (12), der einen fixierten Rahmen (13), einen bewegbaren Rahmen (14, 14b) sowie eine Beleuchtungsvorrichtung des Mähbalkens(12) umfasst, wobei der Mähbalken (12) an einem Trägerarm (19) positioniert ist, der in Bezug auf den bewegbaren Rahmen (14, 14b) angelenkt ist, wobei ein Zylinder (28) zwischen dem Trägerarm (19) und dem bewegbaren Rahmen (14, 14b) positioniert ist, der den Trägerarm (19) des Mähbalkens(12) angehoben hält, wenn er gemäß einer voreingestellten Kraft hochgeladen ist, wobei auch eine Freigabestange (17) zwischen dem fixierten Rahmen (13) und dem Mähbalken (12) positioniert ist und zwei Zylinder (27) jeweils zwischen dem bewegbaren Rahmen (14, 14b) und dem Trägerarm (19) positioniert sind, **dadurch gekennzeichnet, dass** auch ein erster Hydraulikzylinder (25) vorgesehen ist, der zwischen dem fixierten Rahmen (13) und der Freigabestange (17) positioniert ist, und ein zweiter Hydraulikzylinder (35) vorgesehen ist, der zwischen dem bewegbaren Rahmen (14, 14b) und dem Trägerarm (19) des Mähbalkens (12) positioniert ist, wobei der erste und zweite Hydraulikzylinder (25, 35) durch die Freigabestange (17) hydraulisch verbunden und aktiviert sind, die bei Anwesenheit einer Widerstandskraft auf den Mähbalken dazwischengeschaltet ist, wobei die beiden Zylinder (27) an einem ersten Ende an einem Zapfen (31), der in den Trägerarm (19) verläuft, und an dem anderen gegenüberliegenden Ende an einem Zapfen (32) eingeschränkt sind, der rotatorisch in Bezug auf den bewegbaren Rahmen (14) angeordnet und innerhalb von Schlitzen (33) von Ohren (34) positioniert ist, die sich von dem bewegbaren Rahmen (14) erstrecken.

2. Mäher (10) nach Anspruch 1, **dadurch gekennzeichnet, dass** der erste und zweite Zylinder (25, 35) durch Widerstandskräfte aktiviert sind, die dem Vorschub des Mähbalkens (12) entgegengesetzt sind, und beseitigt werden, sobald der Mähbalken (12) tendenziell den Boden verlässt, da die Widerstandskräfte nicht mehr vorhanden sind.

3. Mäher (10) nach einem der Ansprüche 1 oder 2, **dadurch gekennzeichnet, dass** der Stift (32) an einem Ende des Hydraulikzylinders (35) positioniert ist, der an seinem anderen Ende an einer Winkelverlängerung (14b) des bewegbaren Rahmens (14) eingeschränkt ist.

4. Mäher (10) nach einem der Ansprüche 1 bis 3, **dadurch gekennzeichnet, dass** der bewegbare Rahmen (14, 14b) auf den fixierten Rahmen (13) eingeschränkt ist, der seinerseits an der Rückseite des Traktors mittels eines gekippten Drehstiftes (15) eingeschränkt ist.

5. Mäher (10) nach einem der Ansprüche 1 bis 4, **dadurch gekennzeichnet, dass** der bewegbare Rahmen ein Teil (14) einteilig mit dem fixierten Rahmen (13) sowie eine quadratische Verlängerung (14b) in Richtung des Mähbalkens(12) umfasst.

6. Mäher (10) nach einem der Ansprüche 1 bis 5, **dadurch gekennzeichnet, dass** die Freigabestange (17) mit dem fixierten Rahmen (13) verbunden ist, wobei der erste Hydraulikzylinder (25) dazwischen geschaltet ist.

7. Mäher (10) nach einem der Ansprüche 1 bis 6, **dadurch gekennzeichnet, dass** ein Ende der Freigabestange (17) mit einem Ausgleichsübertragungselement (23) verbunden ist, das in einem seiner Zwischenbereiche an dem fixierten Rahmen (13) mittels eines Zapfens (24) und an seinem gegenüberliegenden Ende an dem ersten Hydraulikzylinder (25) mittels eines Zapfens (36) eingeschränkt ist.

## Revendications

1. Une faucheuse rotative à disques (10) avec une barre de fauche latérale allégée (12), comprenant un bâti fixe (13), un bâti mobile (14, 14b) et un dispositif d'allègement de la barre de fauche (12), ladite barre de fauche (12) étant positionnée sur un bras porteur (19) articulé par rapport au bâti mobile (14, 14b), un vérin (28) étant positionné entre ledit bras porteur (19) et ledit bâti mobile (14, 14b), lequel maintient ledit bras porteur (19) de ladite barre de fauche (12) levé lorsqu'il est soumis à une force préétablie, une tringle de rappel (17) étant également positionnée entre ledit bâti fixe (13) et ladite barre de fauche (12) et deux vérins (27) étant disposés respectivement entre ledit bâti mobile (14, 14b) et ledit bras porteur (19), **caractérisée en ce qu'**il est également prévu un premier vérin hydraulique (25), positionné entre ledit bâti fixe (13) et ladite tringle de rappel (17), et un second vérin hydraulique (35), positionné entre ledit bâti mobile (14, 14b) et ledit bras porteur (19) de ladite barre de fauche (12), lesdits premier et second vérins hydrauliques (25, 35) étant hydrauliquement connectés et actionnés par ladite tringle de rappel (17) qui intervient en présence d'une force résistante sur la barre de fauche, lesdits deux vérins (27) étant solidarisés, au niveau d'une première extrémité, à un axe (31) engagé dans le bras porteur (19) et, au niveau de l'autre extrémité opposée, à un axe (32) disposé en rotation par rapport audit bâti mobile (14) et positionné à l'intérieur de fentes (33) d'oreilles (34) qui s'étendent à partir dudit bâti mobile (14).

2. La faucheuse (10) selon la revendication 1, **caractérisée en ce que** lesdits premier et second vérins (25, 35) sont actionnés par des forces résistantes qui s'opposent à l'avancée de la barre de fauche (12) et sont neutralisés dès que la barre de fauche (12) tend à quitter le sol car lesdites forces résistantes ne sont plus présentes.

3. La faucheuse (10) selon la revendication 1 ou 2, **caractérisée en ce que** ledit axe (32) est positionné à une extrémité dudit vérin hydraulique (35) qui, à son autre extrémité, est solidarisé à un prolongement (14b) du bâti mobile (14).

4. La faucheuse (10) selon une ou plusieurs des revendications précédentes de 1 à 3, **caractérisée en ce que** ledit bâti mobile (14, 14b) est solidarisé audit bâti fixe (13) solidarisé, à son tour, à l'arrière dudit tracteur au moyen d'un axe tournant incliné (15).

5. La faucheuse (10) selon une ou plusieurs des revendications précédentes de 1 à 4, **caractérisée en ce que** ledit bâti mobile comprend une partie (14) faisant corps avec ledit bâti fixe (13) et un prolongement en équerre (14b) vers ladite barre de fauche (12).

6. La faucheuse (10) selon une ou plusieurs des revendications précédentes de 1 à 5, **caractérisée en ce que** ladite tringle de rappel (17) est reliée audit bâti fixe (13) avec interposition dudit premier vérin hydraulique (25).

7. La faucheuse (10) selon une ou plusieurs des revendications précédentes de 1 à 6, **caractérisée en ce qu'**une extrémité de ladite tringle de rappel (17) est reliée à un élément de transmission d'équilibrage (23) qui est solidarisé, dans une de ses zones intermédiaires, au bâti fixe (13) au moyen d'un axe (24) et, au niveau de son extrémité opposée, audit premier vérin hydraulique (25) au moyen d'un axe (36) .
